# EUROPEAN PATENT SPECIFICATION

(11) **EP 1 110 771 B1**
(45) Date of publication and mention of the grant of the patent: **19.03.2003**
(21) Application number: 99125911.0
(22) Date of filing: 23.12.1999
(51) Int. Cl.: B60H 1/00

(54) **Vehicle with climate control system for transporting farm animals, foodstuffs and/or perishable goods**
Fahrzeug mit Klimaregelungssystem für Vieh, Nahrungsmittel und/oder leicht verderbliche Güter
Véhicule avec système de reglages pour transportation du bétail vivant, des produits alimentaires et/ou de la denrée périssable

(43) Date of publication of application: 27.06.2001
(73) Proprietor: I.R.M.A. S.r.l., 36028 Rossano Veneto (Vicenza) (IT)
(72) Inventor: Pegoraro, Daniele, 36028 Rossano Veneto (Vicenza) (IT); Pegoraro, Davide, 36028 Rossano Veneto (Vicenza) (IT)
(74) Representative: Modiano, Guido, Dr.-Ing.

(56) References cited:
- US-A- 2 762 570
- US-A- 4 462 461
- US-A- 4 481 870
- PATENT ABSTRACTS OF JAPAN vol. 1998, no. 14, 31 December 1998 (1998-12-31) & JP 10 244829 A (KOMATSU LTD;ZEXEL CORP), 14 September 1998 (1998-09-14)

## Description

The present invention relates to a vehicle for transporting farm animals, foodstuffs and/or perishable goods, according to the preamble of claim 1 and known from US-A-2 762 570.

It is known that the transport of animals or foodstuffs is particularly delicate.

In certain cases, the animals must be transported in optimum environmental conditions.

Transport can in fact take even several hours and the load, especially if the external climate conditions are unfavorable, can be affected by it to an unacceptable extent.

In particularly extreme conditions of the outside environment, which normally occur in the middle of summer or of winter, some of the animals may even die, causing possibly considerable commercial damage.

In order to obtain an optimum microclimate inside the transport compartment of the vehicle, vans or motor vehicles are in fact currently available which have, behind the driver's cabin, a box-like loading body which is ventilated and has the support of a burner for heating during cold periods.

However, experience has shown that such equipment is absolutely insufficient, since it does not avoid possible debilitation or death of the animals or deterioration of the foodstuffs in particularly extreme conditions, particularly in the summer period.

Moreover, one should consider that during long journeys there is not only the problem of the temperature or of air from the viewpoint of oxygen supply, but there are also more complex problems due to the interaction of several living beings confined in a tight space.

The aim of the present invention is to provide a vehicle for transporting farm animals, foodstuffs and/or perishable goods which solves the above-mentioned drawbacks of conventional transport vehicles and in particular is suitable to provide, even for long journeys, a microclimate inside the transport compartment which is ideal for the survival and sustenance of the animals and/or foodstuffs.

Within the scope of this aim, an important object of the present invention is to provide a vehicle in which the transport compartment is internally provided with a microclimate which is healthy for the animal and whose climate-control conditions are in practice independent of the external climate conditions.

Another object of the present invention is to provide a vehicle which is particularly flexible as regards the types of animal to be transported and the type of foodstuffs.

Another object of the present invention is to provide a vehicle in which it is possible to provide a precise adjustment which can be easily adapted to the characteristics of the transport route.

Another object of the present invention is to provide a vehicle which can compensate for any malfunctions, ensuring in any case the ideal internal microclimate for the animals and/or foodstuffs.

Another object of the present invention is to provide a vehicle which can be manufactured with conventional technologies and equipment.

This aim, these objects and others which will become apparent hereinafter are achieved by a vehicle as defined and characterised by the features of claim 1.

Further characteristics and advantages of the present invention will become apparent from the following detailed description of an embodiment thereof, illustrated only by way of non-limitative example in the accompanying drawings, wherein:
Figure 1 is an elevation side view of a motor vehicle according to the invention;
Figure 2 is a schematic view of the climate control system associated with the motor vehicle of Figure 1.

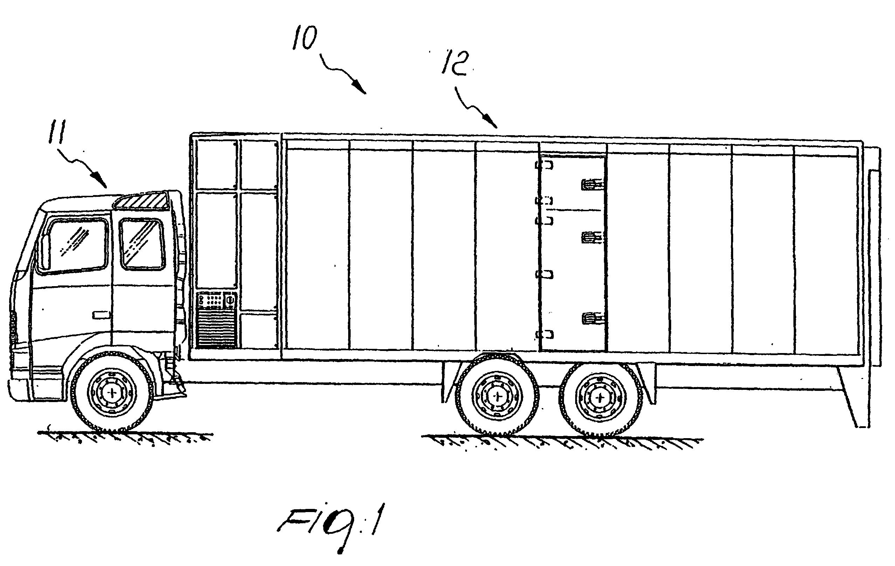

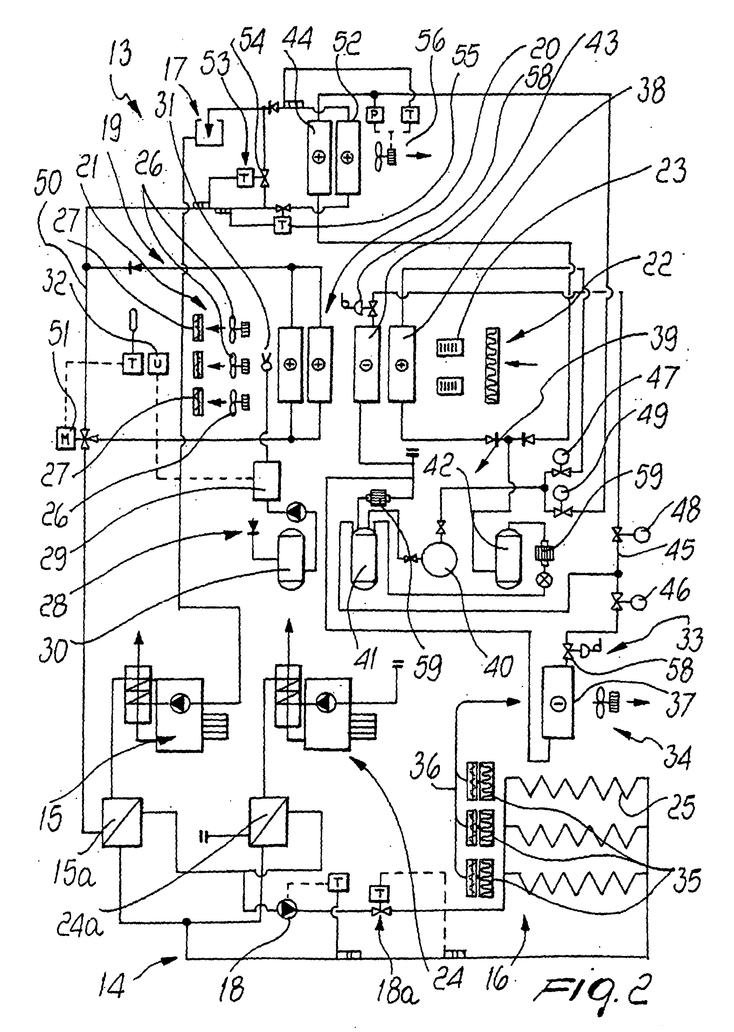

With particular reference to Figures 1 and 2, a motor vehicle with climate control for transporting farm animals and/or foodstuffs, according to the invention, is generally designated by the reference numeral 10.

The motor vehicle 10 comprises, behind a driver's cabin 11, a loading-body 12 which is thermally insulated and is suitable to form a compartment for accommodating the animals and/or foodstuffs, not shown; such compartment is associated with two independent heating circuits with, in this case, a single heat source.

In particular, the two heating circuits are integrated in a general climate-control system which is generally designated by the reference numeral 13.

A first heating circuit 14 with forced circulation of an intermediate liquid in turn comprises a heat source 15, in this case an electric power generator, which is associated, with an exchanger 15a interposed, with an underfloor heating system 16 which is in turn connected to a water tank 17 and to an auxiliary pump 18 with thermostat-controlled valves 18a (T).

The electric power generator can be conveniently a diesel-electric cogeneration unit or an equivalent unit.

A second heating circuit 19 is constituted by a heat source for an intermediate liquid which is constituted, in this embodiment, by the source 15 which said second circuit shares with the first circuit 14 and which is associated with a battery 20 of air heating radiators; the second circuit is furthermore constituted by a unit 21 for the forced aspiration of said air which is associated with filtering means 22 and with sanitizing means 23.

In this embodiment, the first circuit 14 and the second circuit 19 also comprise a second backup source 24 with an associated exchanger 24a which is suitable to become active if the source 15 fails and to ensure the overall operation of the system 13.

The second source 24 is intended as an optional component and has a merely economic relevance.

In particular, the underfloor heating unit 16 is substantially constituted by a pipe 25 which is arranged in a coil and is built into the floor of each one of the movable surfaces into which the box-like body 12 is internally divided.

It can be possible to exclude the circuit portions of one or more surfaces by means of valves which are not shown.

The aspiration unit 21 is furthermore constituted by a plurality of fans 26 which are suitable to draw air from outside, propelling it against the first heating battery 20.

In this case, gate valves 27 for- adjusting the flow-rate in the compartments delimited by the movable surfaces are furthermore associated with the fans 26.

It is possible to exclude the supply of air to one or more of the compartments.

The filtering means 22 are constituted, in this case, by filters for the solid particles that are present in the aspirated air and the sanitizing means 23 are constituted by per se known and commercially available UV lamps.

The system 13 also comprises an air humidifier unit 28 which is in turn. constituted by a per se known and commercially available humidifier 29 which is connected to a tank 30 for supplying humidification water, to sensor means 31 for detecting the humidity inside the box-like body 12 and to diffuser means 32 for diffusing the vaporized water in order to adjust the humidity of the environment inside the box-like body 12.

The system 13 further comprises a first unit 33 for recovering heat from the air; said heat recovery unit is constituted by an aspiration unit 34 (with fans) for aspirating the warm air that is present inside the compartment of the box-like body 12, and the aspiration unit is associated with one or more filters 35 for the air and with ducts 36 for conveying the air to an expansion battery 37, which is in turn connected to a condensation battery 38 for preheating the air that enters the second circuit 19.

The system 13 further comprises a refrigeration circuit 39 which is associated with the first and second heating circuits 14 and 19 so as to provide, for the environment inside the box-like body 12, at least two adjustable states which can be set according to the requirements of the route, one for the summer period and one for the winter period.

The refrigeration circuit 39 is of the dry expansion type and comprises a compressor 40 which is associated with two tanks, respectively designated by the reference numerals 41 and 42, for the cooling liquid, and with an expansion battery 43 which is in turn associated with the ducts for aspirating air from outside.

The refrigeration circuit 39 further comprises a condenser 44 and throttling valves 58.

The refrigeration circuit 39 is associated with the heat recovery unit 34 by means of pipes 45 and four valves: a first valve 46 and a second valve 47 for the "winter" mode, and a third valve 48 and a fourth valve 49 for the "summer" mode.

In the "winter" mode, the first and second valves 46 and 47 are open and the other ones are closed so as to connect the unit 34, by means of the compressor 40, to the preheating condenser 44; in the "summer" mode, the third valve 48 and the fourth valve 49 are open and the other ones are closed so as to connect the recovery unit 34 to the condenser 44.

The first circuit 14 is furthermore connected, by means of pipes 50 and a motorized (M) three-way valve 51 which is thermostat-controlled (T) on the intake air temperature, to a battery of radiators 52 for cooling the water when the intake air exceeds a preset first temperature value.

A bypass circuit 53 actuated by valves, designated by the reference numerals 54 and 55 respectively, is associated with the battery 52; said valves are controlled by integrated temperature sensors (T) (or, as an alternative, by a three-way valve) when the temperature of the input air is intermediate between the first temperature value and a second lower temperature value.

Moreover, the battery of radiators 52 is associated with one or more fans 56 (controlled by pressure probes P and temperature probes T) which are schematically shown in Figure 2.

The duct 50 connects the valve 51 to the exchangers 15a and 24a to recover the heat of the fumes of the sources 15 and 24.

The system 13 is also provided with filters 59 for the coolant fluid.

In practice, operation is as follows: with reference to the system 13 and to the winter condition, the source 15 is active, unless a failure occurs (in which case the auxiliary source 24 intervenes), and heats the water, moving it through the first heating circuit to the underfloor heating unit 16.

At the same time, the second circuit 19 is active and is suitable to aspirate, filter and sanitize the external air, feeding it in optimum temperature and microbiological-purity conditions into the environment, ensuring a combined action with the underfloor heating which brings the temperature to uniform or different levels according to requirements, said levels being in any case optimum within the entire compartment of the box-like body 12.

Moreover, and again simultaneously, the humidifier unit 28 maintains, with feedback control, a preset ideal humidity which, together with the thermostat-controlled temperature, helps to generate an ideal microclimate inside the compartment of the body 12.

However, in the system 13 the air which at this point is depleted but still substantially warm and is present inside the compartment is aspirated and routed to the recovery unit 33.

The heat recovered thereat is sent to a condenser which is capable of preheating the input air, with evident advantages in energy terms.

In the "winter" mode there is also a battery of radiators 52 which are suitable to compensate any air overheating; said radiators are controlled by integrated sensors for the thermostatic control of the battery, with the cooperating action of associated valves 54 and 55, or as an alternative, by a single three-way valve.

The system 13 also comprises, as shown, a refrigeration circuit which starts to operate when the system 13 is set to the "summer" setting.

The refrigeration circuit too benefits from the advantages of the heat recovery unit 33 under the action of the valves 48 and 49.

It is noted that the present invention has achieved its the intended aim and objects.

It should in fact be noted that the integration of two separate heating circuits allows to provide optimum accommodation conditions for the animals, which can withstand even long journeys without appreciable debilitation.

Moreover, the system of the motor vehicle according to the invention also has means for controlling the humidity of the air which further contribute to improving the conditions of the internal microclimate both in the "summer" mode and in the "winter" mode.

It should also be noted that the possibility to cool the inside of the compartment is particularly useful both for animals transported during summer periods and for any foodstuffs which can be advantageously preserved adequately even for long journeys.

In practice it has been observed that the present invention has achieved its intended aim and objects.

The technical details may be replaced with other technically equivalent elements; thus, for example, the expansion batteries of the refrigeration circuit can be supplied with an intermediate fluid cooled by a suitable water chiller, or it is possible to provide gate valves for full recirculation of the air inside said loading body in order to allow transport of refrigerated goods.

The materials and the dimensions may be any according to requirements.

Where technical features mentioned in any claim are followed by reference signs, those reference signs have been included for the sole purpose of increasing the intelligibility of the claims and accordingly, such reference- signs do not have any limiting effect on the interpretation of each element identified by way of example by such reference signs.

## Claims

1. A vehicle (10) for transporting farm animals, foodstuffs and/or perishable goods comprising a thermally insulated loading body (12) which forms a compartment accommodating animals and/or foodstuffs, **characterized in that** it is associated with two independent heating circuits: a first heating circuit (14) with intermediate liquid circulation, which comprises at least one heat source (15) which is associated with an underfloor heating unit (16); and a second heating circuit (19) for air drawn from outside, which comprises said at least one heat source (15) for intermediate liquid which is associated with a battery of radiators (20) for heating the air and with a unit for the forced aspiration (21) thereof combined with filtering means (22) and with sanitizing means (23).

2. The vehicle (10) according to claim 1, **characterized in that** it comprises a refrigeration circuit (39) which cooperates with said first (14) and second heating circuits (19) so as to determine, for the environment, at least two modes, one related to the summer period and one related to the winter period.

3. The vehicle (10) according to one or more of the preceding claims, **characterized in that** it comprises an air humidifier unit (28) which is in turn constituted by a humidifier (29) which is connected to a dedicated tank, (30) by means (31) for detecting the humidity inside said compartment and by diffuser means (32).

4. The vehicle (10) according to one or more of the preceding claims, **characterized in that** it comprises a unit (33) for recovering the heat of the air inside the compartment, which in turn comprises a unit (34) for the forced aspiration of the warm air inside said compartment which is associated with one or more filters (35) for said air, and ducts for conveying said air to an expansion battery (37) which is in turn connected to a battery of condensers (38) for preheating the air entering said compartment.

5. The vehicle (10) according to claim 1, **characterized in that** said at least one heat source is common to said first (14) and second heating circuits (19).

6. The vehicle (10) according to claim 1, **characterized in that** said first (14) and second heating circuit share said heat source (15) and a further heat source (24), an active one and a backup one.

7. The vehicle (10) according to claim 1, **characterized in that** said underfloor heating unit is constituted by one or more pipes (25) arranged in a coil in corresponding floor surfaces into which said compartment is divided, said pipes (25) being connected to said tank.

8. The vehicle (10) according to claim 1, **characterized in that** said first forced aspiration unit (21) unit is constituted by one or more fans (26).

9. The vehicle (10) according to claim 1, **characterized in that** said filtering means (22) comprise one or more filters for the solid particles of the aspirated air.

10. The vehicle (10) according to claim 1, **characterized in that** said sanitizing means (23) are constituted by one or more UV lamps.

11. The vehicle according to claim 2, **characterized in that** said refrigeration circuit (39) is of the dry expansion type.

12. The vehicle (10) according to one or more of the preceding claims, **characterized in that** said refrigeration circuit (39) is associated with said recovery unit (34) by means of pipes (45) and at least four valves: a first valve (46) and a second valve (47) for the "winter" mode, and a third valve (48) and a fourth valve (49) for the "summer" mode.

13. The vehicle (10) according to one or more of the preceding claims, **characterized in that** when it is in the "winter" mode said first (46) and second valves (47) are open and the other ones (48, 49) are closed so as connect said recovery unit (34), by means of a compressor (40), to said battery of preheating condensers (44).

14. The vehicle (10) according to one or more of the preceding claims, **characterized in that** when it is in the "summer" mode, said third (48) and fourth valves (49) are open and the other ones are closed so as to connect said recovery unit (34) to the condenser of said refrigeration circuit.

15. The vehicle (10) according to claim 3, **characterized in that** said diffuser means (32) are constituted by one or more diffuser nozzles.

16. The vehicle (10) according to one or more of the preceding claims, **characterized in that** said first heating circuit (14) is connected to at least one battery of radiators (52) which is in turn connected, by means of one or more thermostat-controlled valves (51), as a branch with respect to another battery of radiators (52) and to said corresponding tank, in order to cool the air when it exceeds a preset value.

17. The vehicle (10) according to one or more of the preceding claims, **characterized in that** a circuit (53) for providing a bypass for values which are intermediate between said first temperature value and a second lower temperature value is associated with said at least one battery of radiators (52).

18. The vehicle (10) according to one or more of the preceding claims, **characterized in that** said at least one radiator (52) is associated with fan means (56) for forcing air against said radiator (52).

19. The vehicle (10) according to one or more of the preceding claims, **characterized in that** said expansion batteries of said refrigeration circuit can be supplied with an intermediate fluid cooled by an appropriately provided water-chiller.

20. The vehicle (10) according to claim 7, **characterized in that** it comprises means for controlling or excluding, according to requirements, the heating of one or more floor surfaces or the input of forced air to one or more compartments.

21. The vehicle (10) according to one or more of the preceding claims, **characterized in that** it comprises gate valves (27) for the full recirculation of the air inside said loading body (12) in order to allow the transport of refrigerated products.

## Patentansprüche

1. Fahrzeug (10) zum Transport von Bauernholüeren, Nahrungsmitteln und/oder verderblichen Gütern, enthaltend aus einem thermisch isolierten Ladekörper (12), der ein für Tiere und/oder Nahrungsmittel Platz bietendes Abteil bildet, **dadurch gekennzeichnet, dass** es mit zwei unabhängigen Heizkreisläufen in Verbindung steht: einem ersten Heizkreislauf (14) mit Zwischenflüssigkeitszukulation, der wenigstens eine Heizquelle (15) umfasst, die mit einer Unterbodenheizeinheit (16) in Verbindung steht; und einem zweiten Heizkreislauf (19) für von der Außenseite angesaugte Luft, der die wenigstens eine Heizquelle (15) für Zwischenflüssigkeit umfasst, die mit einer Batterie von Heizkörpern (20) zum Erwärmen der Luft und mit einer Einheit zur Zwangsansaugung (21) der Luft, kombiniert mit einem Filtermittel (22) und einem Entkeimungsmittel (23), in Verbindung steht.

2. Fahrzeug (10) nach Anspruch 1, **dadurch gekennzeichnet, dass** es einen Kühlkreislauf (39) umfasst, der mit dem ersten (14) und dem zweiten Heizkreislauf (19) zusammenarbeitet, um für die Umgebung wenigstens zwei Modi zu bestimmen, einen bezüglich der Sommerperiode und einen bezüglich der Winterperiode.

3. Fahrzeug (10) nach einem oder mehreren der vorangegangenen Ansprüche, **dadurch gekennzeichnet, dass** es eine Luftbefeuchtungseinheit (28) umfasst, die sich der Reihe nach aus einem Luftbefeuchter (29), der mit einem zugeordneten Tank (30) verbunden ist, aus einem Mittel (31) zum Feststellen der Luftfeuchtigkeit innerhalb des Abteils und aus einem Difmsormittel (32) zusammensetzt.

4. Fahrzeug (10) nach einem oder mehreren der vorangegangenen Ansprüche, **dadurch gekennzeichnet, dass** es eine Einheit (33) zur Rückgewinnung der Wärme der Luft innerhalb des Abteils umfasst, die der Reihe nach aus einer Einheit (34) zur Zwangsansaugung der wannen Luft innerhalb des Abteils, die mit einem oder mehreren Filtern für die Luft in Verbindung steht, und Leitungen zum Fördern der Luft zu einer Expansionsbatterie (37), die in Reihe mit einer Batterie von Kondensatoren (38) zum Vorheizen der in das Abteil eintretenden Luft verbunden ist, besteht.

5. Fahrzeug (10) nach Anspruch 1, **dadurch gekennzeichnet, dass** die wenigstens eine Heizquelle dem ersten (14) und zweiten Heizkreislauf (19) gemeinsam ist,

6. Fahrzeug (10) nach Anspruch 1, **dadurch gekennzeichnet, dass** sich der erste (14) und zweite Heizkreislauf (19) die Heizquelle (15) und eine weitere Heizquelle (24) teilen, d.h. eine aktive und eine behelfsmäßige Heizquelle.

7. Fahrzeug (10) nach Anspruch 1, **dadurch gekennzeichnet, dass** die Unterbodenheizeinheit aus einem oder mehreren Rohren zusammengesetzt ist, die in einer Schlange in entsprechenden Bodenflächen, in die das Abteil aufgeteilt ist, angeordnet sind, wobei die Rohre mit dem Tank verbunden sind.

8. Fahrzeug (10) nach Anspruch 1, **dadurch gekennzeichnet, dass** die erste Einheit zur Zwangsansaugung (21) aus einem oder mehreren Ventilatoren (26) zusammengesetzt ist.

9. Fahrzeug (10) nach Anspruch 1, **dadurch gekennzeichnet, dass** das Filtermittel (22) einen oder mehrere Filter für die festen Teilchen der angesaugten Luft umfasst.

10. Fahrzeug (10) nach Anspruch 1, **dadurch gekennzeichnet, dass** das Entkeimungsmittel (23) aus einer oder mehreren UV-Lampen zusammengesetzt ist.

11. Fahrzeug (10) nach Anspruch 2, **dadurch gekennzeichnet, dass** der Kühlkreislauf (39) vom Trockenexpansionstyp ist.

12. Fahrzeug (10) nach einem oder mehreren der vorangegangenen Ansprüche, **dadurch gekennzeichnet, dass** der Kühlkreislauf (39) mit der Rückgewinnungseinheit (34) mittels Rohren (45) und wenigstens vier Ventilen in Verbindung steht: einem ersten Ventil(46) und einem zweiten Ventil (47) für den "Winter"-Modus und einem dritten Ventil (48) und einem vierten Ventil (49) für den "Sommer"-Modus.

13. Fahrzeug (10) nach einem oder mehreren der vorangegangenen Ansprüche, **dadurch gekennzeichnet, dass** das erste (46) und zweite Ventil (47) geöffnet und die beiden anderen Ventile (48, 49) geschlossen sind, wenn es sich im "Winter"-Modus befindet, um die Rückgewinnungseinheit (34) mittels eines Kompressors (40) mit der Batterie von Vorheizkondensatoren (44) zu verbinden.

14. Fahrzeug (10) nach einem oder mehreren der vorangegangenen Ansprüche, **dadurch gekennzeichnet, dass** das dritte (48) und vierte Ventil (49) geöffnet und die beiden anderen Ventile geschlossen sind, wenn es sich im "Sommer"-Modus befindet, um die Rückgewinnungseinheit (34) mit dem Kondensator des Kühlkreislaufs zu verbinden.

15. Fahrzeug (10) nach Anspruch 3, **dadurch gekennzeichnet, dass** das Diffusormittel (32) aus einer oder mehreren Diffusordüsen zusammengesetzt ist.

16. Fahrzeug (10) nach einem oder mehreren der vorangegangenen Ansprüche, **dadurch gekennzeichnet, dass** der erste Heizkreislauf (14) mit wenigstens einer Batterie von Heizkörpern (52) verbunden ist, die wiederum mittels einer oder mehrerer thermostatgesteuerter Ventile (51) als ein Abzweig in Bezug auf eine andere Batterie von Heizkörpern (52) und mit dem zugeordneten Tank verbunden ist, um die Luft zukühlen, wenn sie einen vorbestimmten Wert übersteigt.

17. Fahrzeug (10) nach einem oder mehreren der vorangegangenen Ansprüche, **dadurch gekennzeichnet, dass** ein Kreislauf (53) mit der wenigstens einen Batterie von Heizkörpern (52) in Verbindung steht, um eine Nebenleitung für Werte bereitzustellen, die zwischen dem ersten Temperaturwert und einem zweiten, tieferen Temperaturwert liegen.

18. Fahrzeug (10) nach einem oder mehreren der vorangegangenen Ansprüche, **dadurch gekennzeichnet, dass** wenigstens ein Heizkörper (52) mit Ventilatormitteln (56) in Verbindung steht, um Luft gegen diesen Heizkörper (52)zu drücken.

19. Fahrzeug (10) nach einem oder mehreren der vorangegangenen Ansprüche, **dadurch gekennzeichnet, dass** die Expansionsbatterien des Kühlkreislaufs mit einer Zwischenflüssigkeit versorgt werden können, die durch einen geeigneten Wasserkühler gekühlt wird.

20. Fahrzeug (10) nach Anspruch 7, **dadurch gekennzeichnet, dass** es, je nach Anforderung, Mittel zum Steuern oder Ausschließen der Erwärmung einer oder mehrerer Bodenflächen oder der Zufuhr angesaugter Luft in ein oder mehrere Abteile umfasst.

21. Fahrzeug (10) nach einem oder mehreren der vorangegangenen Ansprüche, **dadurch gekennzeichnet, dass** es Durchlassventile (27) zur Rezirkulation der Luft innerhalb des Ladekörpers (12) umfasst, um den Transport der gekühlten Produkte zu erlauben.

## Revendications

1. Véhicule (10) de transport d'animaux de ferme, de denrées alimentaires et/ou de marchandises périssables comprennant une unité de chargement isolée thermiquement (12) qui forme un compartiment pour recevoir les animaux et/ou les marchandises périssables **caractérisé en ce qu'**il est associé à deux circuits de chauffage indépendants, un premier circuit de chauffage (14) avec une circulation liquide intermédiaire comprenant au moins une source de chaleur (15) associée à une unité de chauffage sous plancher (16), et un second circuit de chauffage (19) pour l'air aspiré de l'extérieur comprenant ladite au moins une source de chaleur (15) pour le liquide intermédiaire qui est associé à une batterie de radiateurs (20) pour chauffer l'air et avec une unité pour son aspiration forcée (21) combinée avec un moyen de filtration (22) et un moyen de désinfection (23).

2. Véhicule (10) selon la revendication 1, **caractérisé en ce qu'**il comprend un circuit de réfrigération (39) qui coopère avec ledit premier (14) et second circuit de chauffage (19) afin de déterminer, pour l'air ambiant, au moins deux modes, l'un lié à la période d'été et l'autre lié à la période d'hiver.

3. Véhicule (10) selon une ou plusieurs des revendications précédentes, **caractérisé en ce qu'**il comprend une unité d'humidification d'air (28) qui est à son tour constituée d'un humidificateur (29) qui est raccordé à un réservoir spécialisé (30) par un moyen (31) de détection de l'humidité à l'intérieure dudit compartiment et par un moyen de diffusion (32).

4. Véhicule (10) selon une ou plusieurs des revendications précédentes, **caractérisé en ce qu'**il comprend une unité (33) de récupération de l'air chauffé à l'intérieur du compartiment, qui comprend à son tour une unité (34) pour l'aspiration forcée de l'air chaud dans ledit compartiment associé à un ou plusieurs filtres (35) pour ledit air et des conduits pour convoyer ledit air vers une batterie de détente (37) qui est à son tour reliée à une batterie de condensateurs (33) afin de préchauffer l'air entrant dans ledit compartiment.

5. Véhicule (10) selon la revendication 1, **caractérisé en ce que** ladite au moins une source de chaleur est commune audit premier (14) et second circuit de chauffage (19).

6. Véhicule (10) selon la revendication 1, **caractérisé en que** ledit premier (14) et second circuit de chauffage partagent ladite source de chaleur (15) et une source de chaleur supplémentaire (24), l'une active et l'autre de secours.

7. Véhicule (10) selon la revendication 1, **caractérisé en ce que** ladite unité de chauffage sous plancher est constituée d'un ou de plusieurs tuyaux (25) disposés en serpentin dans les surfaces de plancher correspondants aux divisions dudit compartiment, lesdits tuyaux (25) étant raccordés audit réservoir.

8. Véhicule (10) selon la revendication 1, **caractérisé en ce que** ladite première unité d'aspiration forcée (21) est constituée d'un ou de plusieurs ventilateurs (26).

9. Véhicule (10) selon la revendication 1, **caractérisé en ce que** ledit moyen de filtration (22) comprend un ou plusieurs filtres pour les particules solides de l'air aspiré.

10. Véhicule (10) selon la revendication 1, **caractérisé en ce que** ledit moyen de désinfection (28) est constitué d'une ou de plusieurs lampes UV.

11. Véhicule (10) selon la revendication 2, **caractérisé en ce que** ledit circuit de réfrigération (39) est de type à détente sèche.

12. Véhicule (10) selon une ou plusieurs des revendications précédentes, **caractérisé en ce que** ledit circuit de réfrigération (39) est associé à ladite unité de récupération (34) au moyen de tuyaux (45) et au moins de quatre vannes, une première vanne (46) et une seconde vanne. (47) pour le mode « hiver » et une troisième vanne (48) et une quatrième vanne (49) pour le mode « été ».

13. Véhicule (10) selon une ou plusieurs des revendications précédentes, **caractérisé en ce que** lorsqu'il est placé en mode « hiver » lesdites première (46) et seconde vannes (47) sont ouvertes et les autres vannes (48, 49) sont fermées afin de raccorder l'unité de récupération(34), au moyen d'un compresseur (40), à ladite batterie de condensateurs de préchauffage (44).

14. Véhicule (10) selon une ou plusieurs des revendications précédentes, **caractérisé en ce que** lorsqu'il est en mode « été », lesdites troisième (48) et quatrième vannes (49) sont ouvertes et les autres vannes sont fermées afin de raccorder ladite unité de récupération(34) au condensateur dudit circuit de réfrigération.

15. Véhicule (10) selon la revendication 3, **caractérisé en ce que** ledit moyen de diffusion (32) est constitué d'un ou de plusieurs buses de diffusion.

16. Véhicule (10) selon une ou plusieurs des revendications précédentes, **caractérisé en que** ledit premier circuit de chauffage (14) est raccordé à au moins une batterie de radiateurs (52) qui est à son tour raccordé, au moyen d'une ou de plusieurs vannes commandées par thermostat (51), en tant que branche d'une autre batterie de radiateurs (52) et audit réservoir correspondant, afin de refroidir l'air lorsqu'il excède une valeur prédéterminée.

17. Véhicule (10) selon une ou plusieurs des revendications précédentes, **caractérisé en ce qu'**un circuit (53) fournissant une dérivation pour des valeurs qui sont intermédiaires entre ladite première valeur de température et une seconde valeur de température plus basse est associé à ladite au moins une batterie de radiateurs (52).

18. Véhicule (10) selon une ou plusieurs des revendications précédentes, **caractérisé en ce que** ledit au moins un radiateur (52) est raccordé à un moyen de ventilation (56) pour forcer l'air contre ledit radiateur (52).

19. Véhicule (10) selon une ou plusieurs des revendications précédentes, **caractérisé en ce que** lesdites batteries de détente dudit circuit de réfrigération peuvent être approvisionnées à l'aide d'un fluide intermédiaire refroidi par un refroidisseur d'eau fourni de manière appropriée.

20. Véhicule (10) selon la revendication 7, **caractérisé en ce qu'**il comprend un moyen de commander ou d'exclure, selon les exigences, le chauffage d'une ou de plusieurs surfaces de sol ou l'entrée d'air forcé vers un ou plusieurs compartiments.

21. Véhicule (10) selon une ou plusieurs des revendications précédentes, **caractérisé en ce qu'**il comprend un robinet à vanne (27) pour une recirculation complète de l'air à l'intérieur de ladite unité de chargement (12) pour permettre le transport de produits réfrigérés.
